# EUROPEAN PATENT SPECIFICATION

(11) **EP 1 570 621 B1**
(45) Date of publication and mention of the grant of the patent: **30.05.2007**
(21) Application number: 03772588.4
(22) Date of filing: 28.11.2003
(51) Int. Cl.: H04L 29/06, H04L 12/28, H04L 12/24

(54) **METHOD FOR LIMITING THE NUMBER OF NETWORK DEVICES IN A COMMUNICATION NETWORK**
VERFAHREN ZUR BEGRENZUNG DER ANZAHL VON NETZWERKGERÄTEN IN EINEM KOMMUNIKATIONSNETZWERK
PROCEDE DE LIMITATION DU NOMBRE DE DISPOSITIFS DE RESEAU DANS UN RESEAU DE COMMUNICATIONS

(30) Priority: 04.12.2002 US 430877 P
(43) Date of publication of application: 07.09.2005
(73) Proprietor: Koninklijke Philips Electronics N.V., 5621 BA Eindhoven (NL)
(72) Inventor: HARS, Laszlo, Briarcliff Manor, NY 10510-8001 (US)
(74) Representative: Groenendaal, Antonius W. M.
(86) International application number: PCT/IB2003/005506
(87) International publication number: WO 2004/051960

(56) References cited:
- WO-A-02/096036
- US-A1- 2002 116 490
- US-A1- 2003 061 345

## Description

The present invention relates to a network of compliant devices and a method for limiting the size of the network.

A network of devices may share content among the devices. However, the content owner may desire to have controls in place to limit access to the shared content. Hence, the network should be structured so as to limit access to the shared content.

Document US 2002/0116490 A1 discloses a method for monitoring a network as the network changes in size, that is as the number of devices in the network increases or decreases. The method of monitoring comprising defining at least two types of devices, and monitoring the different types of device using different monitoring procedures, either interrogating said devices at different intervals or interrogating said devices using different protocols. The defined types of devices comprise core devices and edge devices. The method also comprises determining the number of devices in the network to be monitored, and changing the monitoring intervals for each type of device in accordance with the determined number.

The present invention provides a network of devices having shared content, subject to rules that limit the number of devices in the network so as to limit access to the content shared. The invention is defined by the independent claims. The dependent claims define advantageous embodiments.

### Brief description of the drawings:

FIG. 1 illustrates a network of devices, in accordance with embodiments of the present invention.
FIG. 2 illustrates the invariance of the sum of devices and tokens, in accordance with embodiments of the present invention.
FIG. 3 illustrates the structure of a network node, in accordance with embodiments of the present invention.
FIG. 4 illustrates a network data structure, in accordance with embodiments of the present invention.
FIG. 5 is a list of network rules, in accordance with embodiments of the present invention.
FIG. 6 illustrates creation of a network, in accordance with embodiments of the present invention.
FIG. 7 illustrates a network's joining protocol from the perspective of a network member device, in accordance with embodiments of the present invention.
FIG. 8 illustrates a network's joining protocol from the perspective of a joining member device, in accordance with embodiments of the present invention.
FIG. 9 illustrates a network's leaving protocol from the perspective of a non-leaving network member device, in accordance with embodiments of the present invention.
FIG. 10 illustrates a network's leaving protocol from the perspective of a leaving member device, in accordance with embodiments of the present invention.
FIG. 11 illustrates connection protocol, in accordance with embodiments of the present invention.

A network such as, inter alia, a home network may include consumer electronic (CE) devices (e.g., a television (TV), video cassette recorder (VCR), compact disk (CD) player, etc.). Such a network starts with only one node, namely a first device such as a newly purchased CE device. The network has an identifier (ID) which is a unique set of characters that differentiates it from other networks. Data (e.g., multimedia content) can be shared among devices within the network, but not with outsiders. To ensure data security, stored content is encrypted, either at the time of storage or at the time of a transfer of the content to another device. When a second device is acquired, it may be joined to the existing network of devices in order to be able to share stored electronic content with devices on the existing network. This enhances capabilities of the network, such as being able to see a recorded TV show in the kitchen or in the family room without physically moving equipment or media (e.g., tape, disk, etc.).

If the network could be substantially extended with the addition of many new devices, then neighbors, friends, family members, etc. could join to this network and one copy of a copyrighted content would be viewable by more people than is acceptable to the copyright owner or licensee. Therefore, there may be a need to limit the size (i.e., the number of devices) of the network. As an example, there may be a need to limit the number of devices on the network to 10 devices. Thus, there is also a need to track of the size of the network as more devices are added to the network. One possibility is to employ a "server device", namely a special member device of the network which stores the number of member devices. Each device join has to be approved by the server device. A draw-back of this solution is that the server device has to be always on-line and connected. A possible scenario is that a person takes a portable MP3 player to his or her car and connects the MP3 player to the car stereo system. If the person wants the MP3 player to share content with other devices on the network, then the MP3 player has to join the network. However, the car stereo may not be connected to the server device at the intended time of joining, so that the join of the MP3 player cannot take place when intended, even if there are fewer devices joined to the network than the maximum number devices allowed in the network. The present invention uses a token system instead of a server device for managing the number of devices in the network. An existing network device can join other devices to the network, even if the existing network device is not connected at that time to the network. This is accomplished by use of tokens which are counted on a token counter in each device of the network. A token is a number on a token counter and is thus a virtual token rather than a physical token. If a given device "receives" T tokens, then the token counter of the given device is incremented by T. If the given device transfers or "gives away" U tokens, then the token counter of the given device is decremented by U. A member device of the network may receive tokens from other devices when the member device needs the tokens

When another device wants to join the network, a physical connection (e.g., radio, infrared, ultrasound, wired, plugged in, etc.) is established between the joining device and an existing member device that has at least one token (i.e., the existing member device's token counter has a token count of at least 1). Both the joining device and the existing member device check each other's authenticity, which includes verifying that both devices are compliant with each other. If the authenticity checks are successful, then the existing member device transfers all information (e.g., encryption keys, network ID's, etc.) to the joining device that is necessary for the joining device to be a member of the network The existing member device decrements its token counter by 1 and may share additional of its tokens with the joining device. The joining device can subsequently join a new device to the network if the joining device has at least one token to use to join the new device to the network.

When a device leaves the home network, the leaving device gives its tokens, if any, to another existing network device to which the leaving device is connected to at the time of the leave. The another existing device ensures that the leaving device destroys all of the leaving device's stored content, stored copy of the network ID, and stored copy of cryptographic keys of the network. At this leaving time, the another existing device increments its number of tokens by 1, reflecting the fact that the network shrank by one device upon the exit of the leaving device.

When a device breaks, gets compromised, gets lost, etc., said device may be expelled from the network, which results in rebuilding the network, including transferring and re-encrypting all of the stored content in the network. This transferring and re-encrypting can be done in a delayed manner, whenever a physical connection is established between a device and the rebuilt network.

Based on the preceding discussion, the present invention discloses a network of devices such as, inter alia, a home network of devices. The network is limited to a maximum of K devices, wherein K is positive integer of at least 2. A device of the network is a hardware device such as a consumer electronics device (e.g., a television, VCR, computer, CD player, etc.). Each device of the network is capable of being connected to at least one other device of the network, and some of the devices are able to share information or content with each other. The sharing of information or content between devices involves a transfer of information or content between devices, and the information or content which is so transferred may be encrypted. Thus the sender of the information or content may need an encryption key and the receiver of the information or content may need a decryption key. The scope of the present invention also includes the case in which data transfer is not encrypted. The imposition of the limit K on the maximum number of such devices in the network restricts the freedom of the owner of the devices, but protects the owner or licensee of the shared information or content on the devices. The constant K is referred to herein as a network size constant.

There are M devices in the network at any time, wherein 1≤M≤K Whenever M<K it is possible for up to K-M new devices to join the network. Thus there are K-M membership vacancies which may be subsequently filled by new members. The network includes "tokens" to represent the membership vacancies. Defining S=K-M, there are S tokens in the network whenever M<K. When M=K, there are no tokens in the network since S=0 when M=K. The S tokens are distributed among the M devices. Thus each device of the M devices may hold one or more tokens such that the sum of the tokens held by the M devices collectively is S. The equation M+S=K expresses the invariance of M+S and is a fundamental equation of the network. The significance of a member device holding a token is that a requirement for a non-member device to become a member device of the network is that the non-member device must connect to one member device of the M devices and engage in a joining protocol with this one member device. If the joining protocol is successful, then this one member device destroys a token that the one member device holds in order to preserve the invariance of M+S; i.e., the joining of the non-member device to the network increments M by 1 so that S must be decremented by 1 to satisfy the fundamental equation of the network. Thus, if this one member device does not hold any tokens, then the non-member device cannot join the network by connecting to this one member device but may instead connect to another member device that holds at least one token.

Similarly, a member device leaving that network must be connected to a non-leaving member device and engage with the non-leaving member device in a leaving protocol. If the leaving protocol is successful, then this non-leaving member device acquires an extra token so as to increment S by 1, which compensates for M being decremented by 1 as a result of the member device leaving the network. If all member devices leave the network, then M=0 which is not allowed and the network is destroyed. A network device may leave the network for any reason such as, inter alia, the network owner may desire to sell or discard the leaving device, or the network is filled up with devices (i.e., S=0 and M=K) and the network owner desires to make room for another device to join the network.

Each device has a token counter that contains the number of tokens held by the device.

The token counter is incremented and decremented as tokens are added to the device and subtracted from the device, respectively. A real token counter may be a memory slot in the device. Some devices do not ever hold tokens and do not have a real token counter. Such a device that never holds tokens is considered to have a virtual token counter that always holds a value of zero. Thus each device of the M devices has a real or virtual token counter that stores a token count of not less than zero. A consequence of a particular device having a virtual token counter is that the particular device would not need an encryption key for joining other devices to the network.

Protocols between or among participating devices (e.g., a joining protocol or a leaving protocol) typically require authentication by each participating device. An authentication made by a first participating device may include, inter alia, checking a second participating device's ID and/or associated password. The authentication may also include, inter alia, a determination of whether the second participating device is physically and logically compatible with the first participating device.

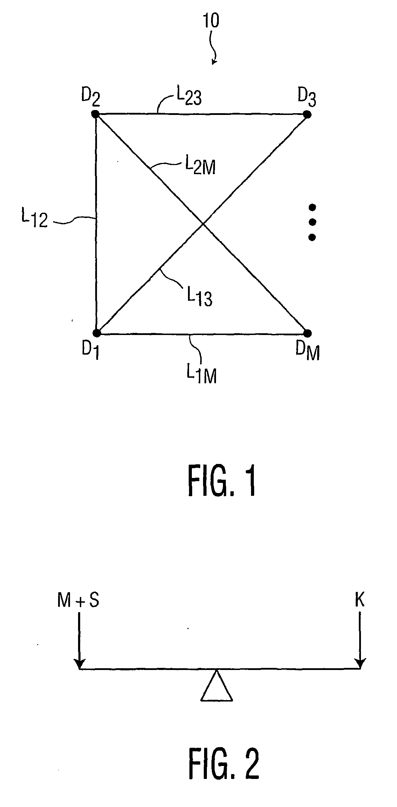

FIG. 1 illustrates a network 10 of M devices denoted as D1, D2, ..., DM wherein M≥1 in accordance with embodiments of the present invention. L12 is a potential communication link between devices D1 and D2. L23 is a potential communication link between devices D2 and D3. L1M is a potential communication link between devices D1 and DM. L2M is a potential communication link between devices D2 and DM. The aforementioned potential links may each represent a real communication link or not represent a real communication link, since a given device may have the capability of being connected to some devices but not to other devices. A real communication link may be through wires, wireless, through telephone lines, through cable lines, through an Ethernet, through the Internet, etc. The network 10 does not comprise a server device for managing the number of devices in the network.

FIG. 2 illustrates the invariance of the sum of devices and tokens, in accordance with embodiments of the present invention. FIG. 2 shows that M+S is balanced against K and thus represent the fundamental network equation of M+S=K.

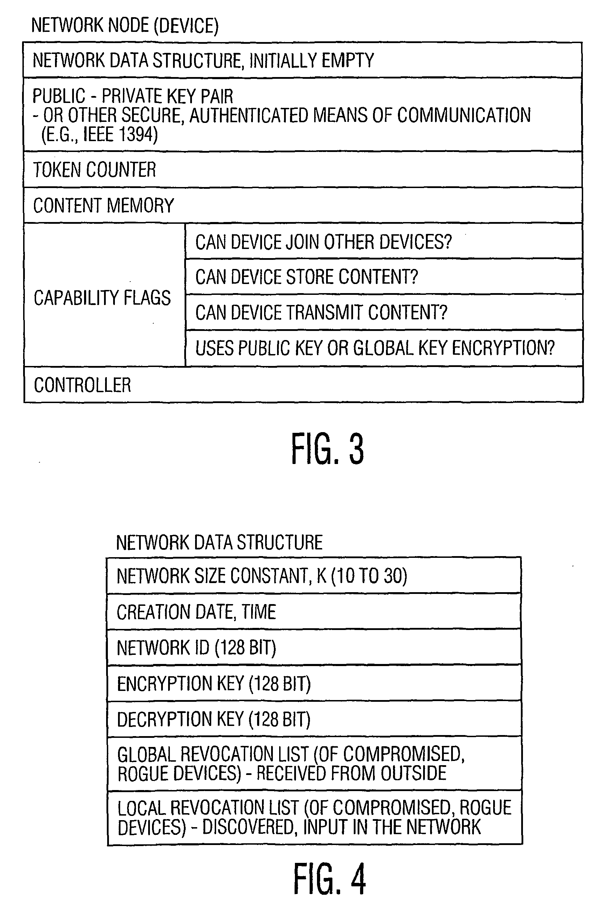

FIG. 3 illustrates the structure of a network node, in accordance with embodiments of the present invention. A network node holds a member device and the node may be thought of as the member device itself. The network node includes node information and hardware that is unique to the node. The network node comprises: a network data structure, a public-private key pair, a token counter, content memory, capability flags, and a controller. The network data structure, which is described infra in conjunction with FIG. 4, comprises network information that is not unique to any device of the M devices. The public-private key pair or other secure, authenticated means of communication (e.g., IEEE 1394) supports encrypted data transfer between devices. The token counter is for keeping track of tokens held by the device as explained supra. As explained supra, not all devices require a real token counter, and some devices may have a virtual token counter. Content memory is for storing content such as video content, audio content (e.g., music), text content, etc. Not all devices need to store content and thus not all devices include content memory. For example, a television may not have content memory.

The capability flags in FIG. 3 each include a value that denotes whether the device has the indicated capability. Although FIG. 3 depicts four example capability flags, the scope of the present invention may not include all of the four example capability flags and may include other capability flags not shown in FIG. 3. For the capability flag "Can device join other devices?", a value of YES implies that the device requires a real token counter, but a value of NO implies that the device does not require a real token counter and may instead have a virtual token counter. For the capability flag "Can device store content?", a value of YES implies that the device must destroy its stored content when leaving the network. For the capability flag "Can device transmit content?", a value of YES implies that the device has the capability of encrypting information if encryption is required in the network. For the capability flag "Uses public key or global key encryption?" an intelligent device such as a computer may use public key encryption while a relatively dumb device such as a Cd player may use global key encryption. Some devices may not use any encryption.

FIG. 3 also indicates a controller in the network node. Each device has a controller which handles communication with other devices. The controller. 3 may also perform other functions such as incrementing or decrementing the token counter, processing protocols which depend on values of capability flags, transfer data or content, encrypt and decrypt data, etc.

FIG. 4 illustrates a network data structure, in accordance with embodiments of the present invention. The network data structure comprises network information that is not unique to any device of the M devices. The network data structure in FIG. 4 includes: the network size constant K, the network creation date and time, the network identifier (ID), the network encryption key, the network decryption key, a global revocation list, and a local revocation list. The network size constant K satisfies K≥2 generally and representative values of K range from 10 to 30. The network ID may be contained within, inter alia, a 128 bit word. The encryption key may be contained within, inter alia, a 128 bit word.

The decryption key may be contained within, inter alia, a 128 bit word. In some networks, all devices having encryption and decryption keys have the same encryption and decryption keys, while in other networks some or all devices have keys which are unique for each device. A revocation list is a list of non-network devices which are not to be joined to the network for any of several reasons. As an example, a rogue device may be known to have been hacked such that the rogue device is susceptible to having its content and data stolen. Such a rogue device would be a security risk to the network and should not be joined to the network. The devices listed in a global revocation list are identified from a source that is out of the network (e.g., a newsletter announcement of an outside organization). The devices listed in a local revocation list are identified from a source that is within the network (e.g., a network device has the identification of the rogue device encoded within itself). The distinction between a global revocation list and a local revocation list may be neglected for some networks so that only one revocation list is present. Other networks do not have any revocation list. The local revocation list is unique to the particular network, while the global revocation list may be shared among a plurality of networks.

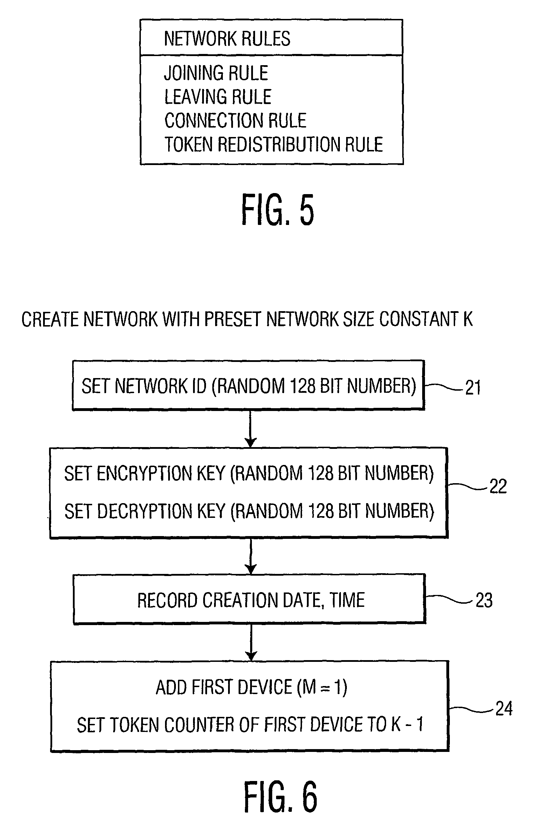

The network functions in accordance with network rules and examples of types of network rules (a joining rule, a leaving rule, a connection rule, and a token redistribution rule) are listed in FIG. 5, in accordance with embodiments of the present invention. The network may have other network rules than those listed in FIG. 5. The entire collection of network rules constitutes the Network Policy.

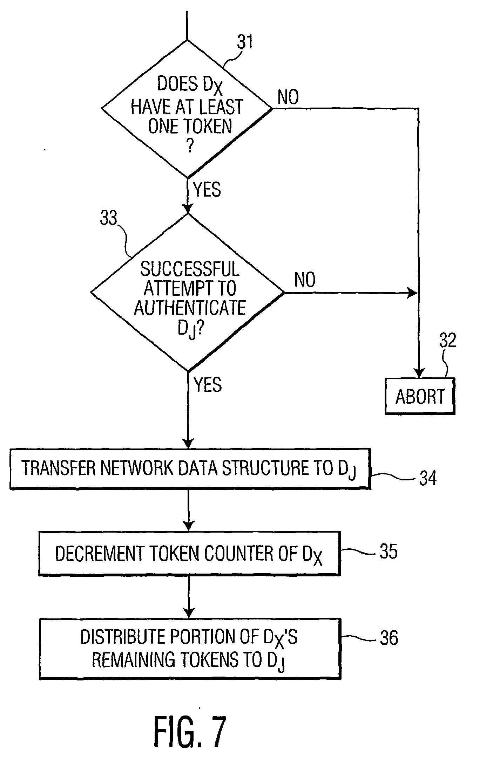

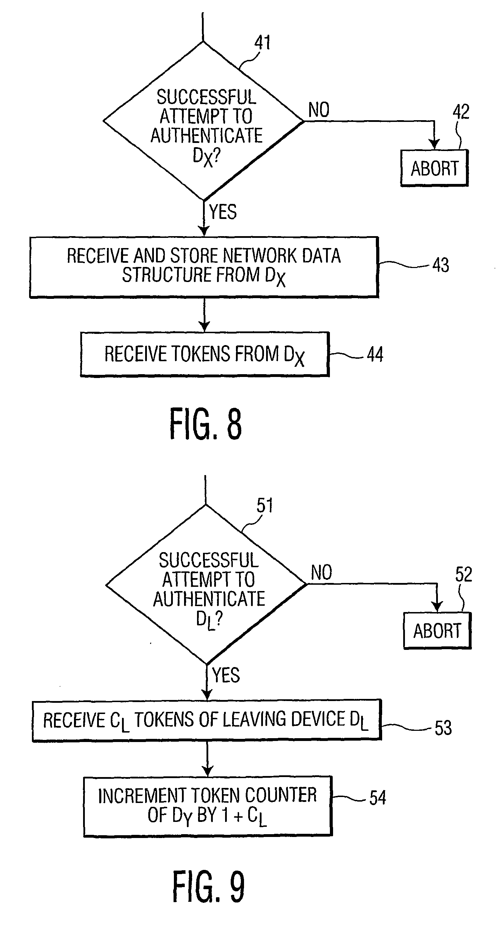

An example of a joining rule is as follows. Consider a device DJ attempting to be joined to the network. DJ is required to be connected to a device DX of the M devices, and while DJ is connected the device DX a joining protocol (see FIGS. 7 and 8) must be executed by which DX authenticates DJ (including verifying that DJ is compliant with DX) and by which DJ authenticates DX and (including verifying that DX is compliant with DJ). If each of said authentications are established through said joining protocol, then DJ is joined to the network. Then the joining protocol adjusts the token counts of the M devices such that S is decremented by 1. The number of devices M of the network becomes is incremented by 1 such that the network equation of M+S=K is satisfied upon the joining of DJ to the network. If each of said authentications and verifications are not established, then DJ is not joined to the network through the connection between DJ and DX.

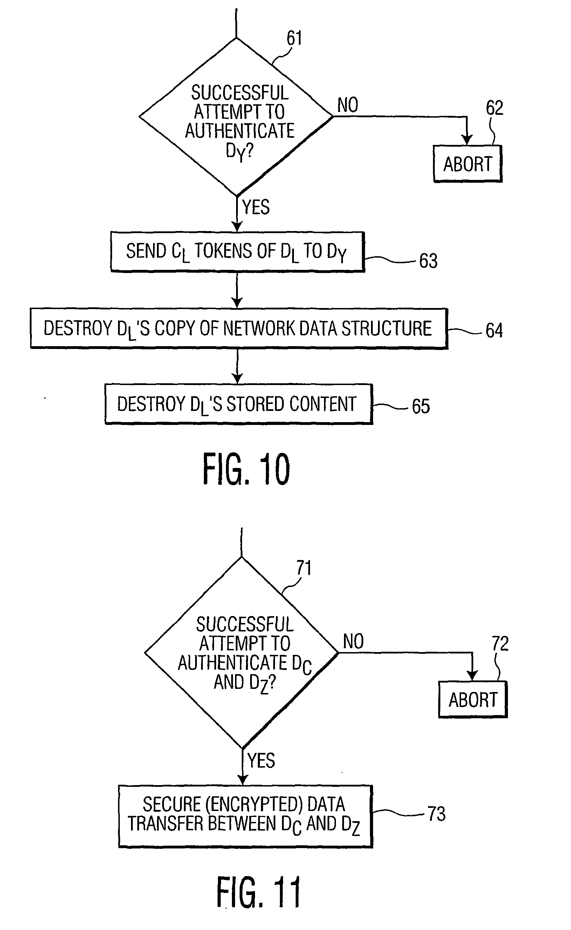

An example of a leaving rule is as follows. Consider a network device DL attempting to leave the network. DL is required to be connected to a device DY of the M devices, and while DL is connected the device DY a leaving protocol (see FIGS. 9 and 10) must be executed by which DY authenticates DL (including verifying that DL is compliant with DY) and by which DL authenticates DY (including verifying that DY is compliant with DL). If each of said authentications are established through said leaving protocol, then DL is deleted from the network and the leaving protocol adjusts the token counts of the remaining M-1 devices such that S is incremented by 1+CL wherein CL is the token count of DL, and the number of devices M of the network is decremented by 1 such the network equation of M+S=K is satisfied upon the leaving of DL from the network. If each of said authentications and verifications are not established, then DL is not permitted to leave the network through the connection between DL and DY.

An example of a connection rule is as follows. Consider a network device DC attempting to connect to the network. Connecting to the network means connecting to at least one device of the network. DC is required to be connected to a device DZ of the M devices, and while DC is connected the device DZ a connection protocol (see FIG. 11) must be executed by which DZ authenticates DC (including verifying that DC is compliant with DZ) and by which DC authenticates DZ (including verifying that DZ is compliant with DC.). If each of said authentications and verifications are established through said connecting protocol, then DC is permitted to connect to the network and likewise permitted to transfer data to and from DZ and to and from other devices directly and indirectly connected to DZ. Such data transfer may be encrypted. If each of said authentications and verifications are not established, then DC is not permitted to be connected to the network through the connection between DC and DZ.

A token redistribution rule redistributes the S tokens among the M devices on occasions other than when a device joins or leaves the network. Such an redistribution is called a special redistribution. A special redistribution is triggered by a condition. The token redistribution rule further prescribes an algorithm for effectuating said redistribution. The algorithm takes into account the condition that triggered the redistribution. For example, a triggering condition may be that all tokens are held by only one member device wherein more than one device exists in the network (i.e., M>1). Such a condition may be undesirable, and thus triggering, if the network philosophy is to distribute tokens as uniformly as possible among the member devices. Thus the token redistribution rule in this example may be to redistribute the tokens among the M devices as uniformly as possible. Note that not all M devices may be connected to the network while a redistribution takes place. Thus if M' devices (2≤M'<M) are connected to the network while a redistribution is taking place, then the token redistribution rule may have only the M' devices partake in the redistribution. An alternate token redistribution rule may have all M devices partake in the redistribution by having the M' devices immediately partake in the redistribution and have the remaining M-M' devices partake in the redistribution at a later time when said remaining M-M' devices are connected to the network. The M' devices connected to the network during implementation of a token redistribution must each authenticate and verify the compliance of the other M'-1 members.

FIG. 6 illustrates creation of a network via steps 21-24, in accordance with embodiments of the present invention. The network size constant K is preset. Step 21 sets the network ID, which may be, inter alia, a random 128 bit number. Step 22 sets the encryption key and decryption key, each of which may be, inter alia, a random 128 bit number. Step 23 records the date and time at which the network is created. The network requires a first device to be initiated and step 24 adds the first device to the network resulting in M=1 and the token counter of the first device is set to K-1. Thus S=K-1 and M+S=K as is required.

FIGS. 7 and 8 collectively depict a joining protocol relating to a device DJ attempting to join the network by being connected to existing member device DX, in accordance with embodiments of the present invention. FIG. 7 illustrates the network's joining protocol from the perspective of the member device DX, and FIG. 8 illustrates the network's joining protocol from the perspective of the joining member device DJ.

In FIG. 7, step 31 asks whether DX has at least one token. If NO, then the joining protocol aborts in step 32. If YES, then DX attempts in step 33 to authenticate DJ. If the authentication of DJ fails, then the joining protocol aborts in step 32. If the authentication of DJ succeeds, then the network data structure is transferred (i.e., copied) from DX to DJ in step 34, followed by decrementing the token counter of DX by 1 in step 35 to adjust for the entry of DJ into the network.

If DX has any remaining tokens after execution of step 35, then DX may distribute a portion of DX's remaining tokens to DJ as depicted in step 36. Alternatively, DX may not distribute any of DX's remaining tokens to DJ. Assume that prior to the attempted joining of DJ, the device DX has a token count CX. If CX = 0, then the joining rule may bar DJ from joining the network through the connection between DJ and DX. Alternatively, if CX = 0 and M>1 and if during execution of the joining protocol DX is directly or indirectly connected to another device DXX of the M devices (wherein DXX has a token count of at least 1), then upon the joining of DJ to the network, the joining rule may decrement the token count of DXX by 1 and set the token count of DJ to zero, which permits DJ to join the network through its connection with DX even though DX has no tokens. If CX =1, then DX loses its one token so that DJ can join the network. If CX>1, then a first joining rule may be such that DX retains all of its tokens except the one token necessary for DJ to join the network. If CX >1, then a second joining rule may be such that DX distributes a portion of DX's remaining tokens to DJ. For example, the second joining rule may state that DX distributes α tokens to DJ, wherein 0<α≤CX-1, which would decrement the token count of DX by 1+α and setting the token count of DJ to α. A possible value of α is (CX-1)/2 rounded downward to the next lowest integer {if(CX-1)/2 is not an integer}, which represents an attempt to uniformly distributes DX's tokens between DX and DJ. Note that the first joining rule is equivalent to having α=0 when CX >1.

In FIG. 8, step 41 attempts to have DJ authenticate DX. If the authentication of DX fails, then the joining protocol aborts in step 42. If the authentication of DX succeeds, then DJ receives and stores the network data structure from DX in step 43. If DX has any remaining tokens after execution of step 43, then DJ may receive a portion of DX's remaining tokens in step 44 as discussed supra in conjunction with step 36 of FIG. 7. Alternatively, DJ may not receive any of DX's remaining tokens as discussed supra in conjunction with FIG. 7.

FIGS. 9 and 10 collectively depict a leaving protocol relating to a device DL attempting to leave the network by being connected to remaining member device DY, in accordance with embodiments of the present invention. FIG. 9 illustrates the network's leaving protocol from the perspective of the remaining member device DY, and FIG. 8 illustrates the network's leaving protocol from the perspective of the leaving member device DL.

In FIG. 9, step 51 attempts to have DY authenticate DL. If the authentication of DL fails, then the leaving protocol aborts in step 52. If the authentication of DL succeeds and DL has a token count of CL (i.e., CL tokens), then remaining member device DY receives the CL tokens of the leaving member device DL in step 53, followed by incrementing the token counter of DY by 1+CL in order to preserve the M+S=K network equation. Additional possibilities exist for distributing the CL tokens in the network if M>2 prior to the leaving of DL from the network. If DY is directly or indirectly connected to another J devices of the M devices while the leaving protocol is being executed, then the token counts of DY and of the other J devices may be incremented such that SJ+1 is incremented by 1+CL, wherein SJ+1 denotes a summation of the token counts over DY and the J devices. As a first example, the token count of DY and the token counts of J devices may be individually incremented such that the resultant total token counts of DY and the J devices are approximately uniformly distributed among DY and the J devices. As a second example, the token count of DY and the token counts of J devices may be individually incremented such that the 1+CL tokens are approximately uniformly distributed among DY and the J devices. As a third example, the token count of DY and the token counts of J devices may individually incremented such that the 1+CL tokens are randomly distributed among DY and the J devices in accordance with a probability distribution. The probability distribution may be uniform with respect to DY and the J devices. Alternatively, the probability distribution may be biased with respect to DY and the J devices such as by, inter alia, favoring DY or by favoring one or more selected devices of the J devices.

In FIG. 10 step 61 attempts to have DL authenticate DY. If the authentication of DY fails, then the leaving protocol aborts in step 62. If the authentication of DY succeeds and DL has a token count of CL (i.e., CL tokens), then the leaving member device DL may send its CL tokens to the remaining member device DY in step 63, or any of the additional possibilities discussed supra in connection with FIG. 9 may apply for distributing the CL tokens in the network. In step 64, DL destroys DL's copy of the network data structure. In step 65, DL destroys DL's copy of DL's stored content if DL has stored content.

None of the M devices are required to be connected to any other device of the M devices. When a given device of the M devices connects with another device of the M devices, then the given device and the another device must each execute a connection protocol verifying each other's authenticity. FIG. 11 depicts such a connection protocol relating to a device DC attempting to connect to the network by being connected to member device DZ of the network, in accordance with embodiments of the present invention. In FIG. 11, step 71, DZ attempts to authenticate DC, and DC attempts to authenticate DZ. If either of these authentication attempts fail, then the connection protocol aborts in step 6\72. If both of these authentication attempts succeed then, then data transfer from DZ to DC and/or from DC to DZ may occur in step 73, and such data transfer may proceed in a secure manner such as by being encrypted.

While embodiments of the present invention have been described herein for purposes of illustration, many modifications and changes will become apparent to those skilled in the art. Accordingly, the appended claims are intended to encompass all such modifications and changes as fall within the true spirit and scope of this invention.

## Claims

1. A network (10), comprising:
M devices (D1, D2, D3, DM) such that M ≥ 1;
each device of the M devices having a real or virtual token counter that stores a token count of not less than zero, wherein an equation M + S = K must be satisfied, wherein M is a variable that changes when devices join or leave the network (10), wherein S denotes the number of tokens in the network (10) and is numerically equal to a summation of the token counts over the M devices, wherein K is a characteristic constant of the network (10) having an integer value of at least 2 that is established upon creation of the network (10);
each device of the M devices being arranged for functioning in accordance with a collection of network rules observing said equation;
the collection of network rules comprising:
a joining rule for effectuating a further non-network device DJ joining the network (10); and
a leaving rule for effectuating a device DL of the M devices leaving the network (10).

2. The network (10) of claim 1, said joining rule requiring DJ to be connected to a device DX of the M devices and while DJ is connected to the device DX, the devices DJ and DX being arranged for executing a joining protocol by which DX authenticates (33) DJ and by which DJ authenticates (41) DX, and if said authentications are established through said joining protocol then DJ is joined to the network (10) if S > 0 and the joining protocol adjusts the token counts of the M devices such that S is decremented by 1 and the number of devices M of the network (10) is incremented by 1 so that said equation is satisfied upon the joining of DJ to the network (10), wherein if each of said authentications (33, 41) are not established then DJ is not joined to the network (10) through the connection between DJ and DX.

3. The network (10) of claim 2, wherein prior to the attempt by DJ to join the network (10) the device DX has a token count CX of at least 1, and wherein upon the joining of DJ to the network (10) said decrementing S by 1 is effectuated by decrementing the token count of DX by 1+α and setting the token count of DJ to α, wherein α is an integer in the range of 0 ≤ α ≤CX-1.

4. The network (10) of claim 2, wherein prior to the attempt by DJ to join the network (10) the device DX has a token count CX of zero which bars DJ from joining the network (10) through the connection between DJ and DX.

5. The network (10) of claim 2, wherein prior to the attempt by DJ to join the network (10) the device DX has a token count CX of zero and M > 1, wherein during execution of the joining protocol DX is directly or indirectly connected to another device DXX of the M devices, the device DXX being arranged for executing said joining protocol, wherein DXX has a token count of at least 1, and wherein upon the joining of DJ to the network (10) said decrementing S by 1 is effectuated by decrementing the token count of DXX by 1 and setting the token count of DJ to zero.

6. The network (10) of claim 2, wherein each device of the M devices has a memory for storing a same network data structure that comprises network information that is not unique to any device of the M devices, wherein the network data structure comprises a revocation list of rogue devices, and wherein the joining protocol does not permit DJ to be joined to the network (10) if DJ is on the revocation list.

7. The network (10) of claim 2, wherein if DJ is joined to the network (10) then the joining protocol provides DJ with an decryption key and provides DJ with an encryption key if DJ has a real token counter but does not provide DJ with said encryption key if DJ has a virtual token counter.

8. The network (10) of claim 1, said leaving rule requiring DL to be connected to a device DY of the M devices and while DL is connected to the device DY, the devices DL and DY being arranged for executing a leaving protocol by which DY authenticates (51) DL and by which DL authenticates (61) DY, and if said authentications are established through said leaving protocol then DL is deleted from the network (10) and the leaving protocol adjusts the token counts of the remaining M-1 devices such that S is incremented by 1 and the number of devices M of the network (10) is decremented by 1 so that said equation is satisfied upon the leaving of DL from the network (10), wherein if each of said authentications (51, 61) are not established then DL is not permitted to leave the network (10) through the connection between DL and DY.

9. The network (10) of claim 8, wherein upon the leaving of DL from the network (10) said incrementing S by 1 is effectuated by incrementing the token count of DY by 1+CL (54), wherein CL is the token count of DL.

10. The network,(10) of claim 8, wherein M > 2 prior to the leaving of DL from the network (10), wherein upon the leaving of DL from the network (10) said incrementing S by 1 is effectuated by incrementing the token count of DY and the token counts of another J devices of the M devices to which DY is directly or indirectly connected such that SJ+1 is incremented by 1+CL, wherein SJ+1 denotes a summation of the token counts over DY and the J devices, and wherein CL is the token count of DL.

11. The network (10) of claim 1, wherein the device DL is arranged for destroying any stored content (65) upon leaving the network (10).

12. The network (10) of claim 1, wherein the collection of network rules comprises a token redistribution rule which prescribes at least one condition that triggers a redistribution of the S tokens among the M devices, and wherein the token redistribution rule further prescribes an algorithm for effectuating said redistribution, and wherein the algorithm takes into account the condition that triggered the redistribution.

13. A method of joining a non-network device DJ to a network (10) of devices, comprising:
providing the network (10) as comprising M devices (D1, D2, D3, D4) such that M ≥ 1;
each device of the M devices having a real or virtual token counter that stores a token count of not less than zero, wherein an equation M + S = K must be satisfied, wherein M is a variable that changes when devices join or leave the network (10), wherein S denotes the number of tokens in the network (10) and is numerically equal to a summation of the token counts over the M devices, wherein K is a characteristic constant of the network (10) having an integer value of at least 2 that is established upon creation of the network (10); and
attempting to join the device DJ to the network (10) in accordance with a joining rule observing said equation.

14. The method of claim 13, said joining rule requiring DJ to be connected to a device DX of the M devices and while DJ is connected to the device DX a joining protocol must be executed by which DX authenticates (33) DJ and by which DJ authenticates (41) DX, and if said authentications are established through said joining protocol then DJ is joined to the network (10) if S > 0 and the joining protocol adjusts the token counts of the M devices such that S is decremented by 1 and the number of devices M of the network (10) incremented by 1 so that said equation is satisfied upon the joining of DJ to the network (10), wherein if each of said authentications (33, 41) are not established then DJ is not joined to the network (10) through the connection between DJ and DX.

15. The method of claim 14, wherein prior to said attempting DX has a token count CX of at least 1, and wherein upon the joining of DJ to the network (10) said decrementing S by 1 is effectuated by decrementing the token count of DX by 1+α and setting the token count of DJ to α, wherein α is an integer in the range of 0 ≤ α ≤ CX-1.

16. The method of claim 14, wherein prior to said attempting DX has a token count CX of zero which bars DJ from joining the network (10) through the connection between DJ and DX.

17. The method of claim 14, wherein prior to said attempting DX has a token count CX of zero and M > 1, wherein during execution of the joining protocol DX is directly or indirectly connected to another device DXX of the M devices, wherein DXX has a token count of at least 1, and wherein upon the joining of DJ to the network (10) said decrementing S by 1 is effectuated by decrementing the token count of DXX by 1 and setting the token count of DJ to zero.

18. The method of claim 14, wherein each device of the M devices has a memory for storing a same network data structure that comprises network information that is not unique to any device of the M devices, wherein the network data structure comprises a revocation list of rogue devices, and wherein the joining protocol does not permit DJ to be joined to the network (10) if DJ is on the revocation list.

19. The method of claim 14, wherein if DJ is joined to the network (10) then the joining protocol provides DJ with an decryption key and provides DJ with an encryption key if DJ has a real token counter but does not provide DJ with said encryption key if DJ has a virtual token counter.

20. A method by which a device DL leaves a network (10) of devices, comprising:
providing the network (10) as comprising M devices (D1, D2, D3, D4) such that M ≥ 1, device DL being one of the M devices;
each device of the M devices having a real or virtual token counter that stores a token count of not less than zero, wherein an equation M + S = K must be satisfied, wherein M is a variable that changes when devices join or leave the network (10), wherein S denotes the number of tokens in the network (10) and is numerically equal to a summation of the token counts over the M devices, wherein K is a characteristic constant of the network (10) having an integer value of at least 2 that is established upon creation of the network (10); and
attempting by the device DL to leave the network (10) in accordance with a leaving rule observing said equation.

21. The method of claim 20, said leaving rule requiring DL to be connected a device DY of the M devices and while DL is connected to the device DY a leaving protocol must be executed by which DY authenticates (51) DL and by which DL authenticates (61) DY, and if said authentications are established through said leaving protocol then DL is properly deleted from the network (10) and the leaving protocol adjusts the token counts of the remaining M-1 devices such that S is incremented by 1 and the number of devices M of the network (10) is decremented by 1 so that said equation is satisfied upon the leaving of DL from the network (10), wherein if each of said authentications (51, 61) are not established then DL is not permitted to leave the network (10) through the connection between DL and DY.

22. The method of claim 21, wherein upon the leaving of DL from the network (10) said incrementing S by 1 is effectuated by incrementing the token count of DY by 1+CL (54), wherein CL is the token count of DL.

23. The method of claim 21, wherein M > 2 prior to the leaving of DL from the network (10), wherein upon the leaving of DL from the network (10) said incrementing S by 1 is effectuated by incrementing the token count of DY and the token counts of another J devices of the M devices to which DY is directly or indirectly connected such that SJ+1 is incremented by 1+CL, wherein SJ+1 denotes a summation of the token counts over DY and the J devices, and wherein CL is the token count of DL.

24. The method of claim 23, wherein the token count of DY and the token counts of the J devices are individually incremented such that the resultant total token counts of DY and the J devices are approximately uniformly distributed among DY and the J devices.

25. The method of claim 23, wherein the token count of DY and the token counts of the J devices are individually incremented such that the 1+CL tokens are approximately uniformly distributed among DY and the J devices.

26. The method of claim 23, wherein the token count of DY and the token counts of the J devices are individually incremented such that the 1+CL tokens are randomly distributed among DY and the J devices.

27. The method of claim 20, wherein the device DL must destroy any stored content (65) upon leaving the network (10).

## Patentansprüche

1. Netzwerk (10), umfassend :
M Geräte (D1, D2, D3, DM) in einer Weise, dass M ≥ 1;
wobei jedes der M Geräte einen reellen oder virtuellen Tokenzähler aufweist, der eine Tokenzählung von mindestens null speichert, wobei eine Gleichung M + S = K erfüllt werden muss, wobei M eine Variable ist, die sich ändert, wenn Geräte sich ans Netzwerk (10) anschließen oder aus ihm austreten, wobei S die Anzahl der Token im Netzwerk (10) bezeichnet und numerisch gleich einer Summierung der Tokenzählungen aus den M Geräten ist, wobei K eine charakteristische Konstante des Netzwerks (10) ist, die einen Ganzzahlwert von mindestens 2 aufweist, der bei der Erstellung des Netzwerks (10) festgelegt wird;
wobei jedes Gerät der M Geräte angeordnet ist, um gemäß einer Sammlung von Netzwerkregeln, die die Gleichung einhalten, zu funktionieren;
wobei die Sammlung von Netzwerkregeln umfasst :
eine Anschlussregel, um das Anschließen eines weiteren Nichtnetzwerkgerätes DJ ans Netzwerk (10) zu bewirken, und
eine Austrittsregel, um das Austreten eines Gerätes DL der M Geräte aus dem Netzwerk (10) zu bewirken

2. Netzwerk (10) nach Anspruch 1, wobei die Anschlussregel bedingt, dass DJ mit einem Gerät DX der M Geräte verbunden ist und während DJ mit dem Gerät DX verbunden ist, die Geräte DJ und DX angeordnet sind, um ein Anschlussprotokoll, durch welches DX DJ authentifiziert (33) und durch welches DJ DX authentifiziert (41), auszuführen, und wenn die Authentifizierungen durch das Anschlussprotokoll hergestellt sind, dann DJ ans Netzwerk (10) angeschlossen wird, wenn S > 0, und das Anschlussprotokoll passt die Tokenzählungen der M Geräte derart an, dass S um 1 dekrementiert wird und die Anzahl der Geräte M des Netzwerks (10) um 1 inkrementiert wird, so dass die Gleichung beim Anschließen von DJ ans Netzwerk (10) erfüllt ist, wobei, wenn nicht jede der Authentifizierungen (33, 41) hergestellt ist, DJ dann nicht durch die Verbindung zwischen DJ und DX ans Netzwerk (10) angeschlossen wird.

3. Netzwerk (10) nach Anspruch 2, wobei vor dem Versuch von DJ, sich ans Netzwerk (10) anzuschließen, das Gerät DX eine Tokenzählung CX von mindestens 1 aufweist, und wobei beim Anschließen des DJ ans Netzwerk (10) die Dekrementation S um 1 durch Dekrementation der Tokenzählung von DX um 1+α und Setzen der Tokenzählung von DJ auf α bewirkt wird, wobei α eine Ganzzahl im Bereich von 0 ≤ α ≤ CX-1 ist.

4. Netzwerk (10) nach Anspruch 2, wobei vor dem Versuch von DJ, sich ans Netzwerk (10) anzuschließen, das Gerät DX eine Tokenzählung CX von null aufweist, die DJ das Anschließen ans Netzwerk (10) durch die Verbindung zwischen DJ und DX versperrt.

5. Netzwerk (10) nach Anspruch 2, wobei vor dem Versuch von DJ, sich ans Netzwerk (10) anzuschließen, das Gerät DX eine Tokenzählung CX von null und M > 1 aufweist, wobei während der Ausführung des Anschlussprotokolls DX direkt oder indirekt mit einem anderen Gerät DXX der M Geräte verbunden ist, wobei das Gerät DXX angeordnet ist, um das Anschlussprotokoll auszuführen, wobei DXX eine Tokenzählung von mindestens 1 aufweist und wobei beim Anschließen von DJ ans Netzwerk (10) die Dekrementation S um 1 durch Dekrementation der Tokenzählung von DXX um 1 und Setzen der Tokenzählung von DJ auf null bewirkt wird.

6. Netzwerk (10) nach Anspruch 2, wobei jedes Gerät der M Geräte einen Speicher zum Speichern einer gleichen Netzwerkdatenstruktur aufweist, der Netzwerkinformation umfasst, die nicht auf irgendeines der M-Geräte beschränkt ist, wobei die Netzwerkdatenstruktur eine Widerrufungsliste von minderwertigen Geräten umfasst und wobei das Anschlussprotokoll DJ nicht das Anschließen von DJ ans Netzwerk (10) gestattet, wenn DJ auf der Widerrufungsliste ist.

7. Netzwerk (10) nach Anspruch 2, wobei , wenn DJ ans Netzwerk (10) angeschlossen ist, dann das Anschlussprotokoll DJ einen Schlüssel zur Entschlüsselung bereitstellt und DJ einen Schlüssel zur Verschlüsselung bereitstellt, wenn DJ einen reellen Tokenzähler aufweist, aber DJ nicht den Schlüssel zur Verschlüsselung bereitstellt, wenn DJ einen virtuellen Tokenzähler aufweist.

8. Netzwerk (10) nach Anspruch 1, wobei die Austrittsregel bedingt, dass DL mit einem Gerät DY der M Geräte verbunden wird, und während DL mit dem Gerät DY verbunden ist, die Geräte DL und DY angeordnet sind, um ein Austrittsprotokoll auszuführen, durch welches DY DL authentifiziert (51) und durch welches DL DY authentifiziert (61), und wenn die Authentifizierungen durch das Austrittsprotokoll hergestellt sind, dann DL aus dem Netzwerk (10) gelöscht wird, und das Austrittsprotokoll passt die Tokenzählungen der verbleibenden M-1 Geräte derart an, dass S um 1 inkrementiert wird und die Anzahl der Geräte M des Netzwerks (10) um 1 dekrementiert wird, so dass die Gleichung beim Austreten von DL aus dem Netzwerk (10) erfüllt ist, wobei, wenn nicht jede der Authentifizierungen (51, 61) hergestellt ist, DL nicht gestattet wird, aus dem Netzwerk (10) durch die Verbindung zwischen DL und DY auszutreten.

9. Netzwerk (10) nach Anspruch 8, wobei das Austreten von DL aus dem Netzwerk (10) die Inkrementation S um 1 durch Inkrementation der Tokenzählung von DY um 1+CL (54) bewirkt wird, wobei CL die Tokenzählung von DL ist.

10. Netzwerk (10) nach Anspruch 8, wobei M > 2 vor dem Austreten von DL aus dem Netzwerk (10), wobei beim Austreten von DL aus dem Netzwerk (10) die Inkrementation S um 1 durch Inkrementation der Tokenzählung von DY bewirkt wird und den Tokenzählungen weiterer J Geräte der M Geräte, mit welchen DY direkt oder indirekt derart verbunden ist, dass SJ+1 um 1+CL inkrementiert wird, wobei SJ+1 eine Summierung der Tokenzählungen aus DY und den J Geräten bezeichnet und wobei CL die Tokenzählung von DL ist.

11. Netzwerk (10) nach Anspruch 1, wobei das Gerät DL angeordnet ist, um jeglichen gespeicherten Inhalt (65) beim Austreten aus dem Netzwerk (10) zu zerstören.

12. Netzwerk (10) nach Anspruch 1, wobei die Sammlung von Netzwerkregeln eine Tokenumverteilungsregel umfasst, die mindestens eine Bedingung vorschreibt, welche eine Umverteilung von S Token zwischen den M Geräten auslöst und wobei die Tokenumverteilungsregel ferner einen Algorithmus vorschreibt, um die Umverteilung zu bewirken und wobei der Algorithmus die Bedingung, die die Umverteilung auslöste, berücksichtigt.

13. Verfahren zum Anschließen eines Nichtnetzwerkgerätes DJ an ein Netzwerk (10) von Geräten, umfassend :
Bereitstellen des Netzwerks (10) als M Geräte (D1, D2, D3, DM) umfassend in einer Weise, dass M ≥ 1;
Jedes Gerät der M Geräte mit einem reellen oder virtuellen Tokenzähler, der eine Tokenzählung von mindestens null speichert, wobei eine Gleichung M + S = K erfüllt werden muss, wobei M eine Variable ist, die sich ändert, wenn Geräte ans Netzwerk (10) angeschlossen werden oder aus ihm austreten, wobei S die Anzahl der Token im Netzwerk (10) bezeichnet und numerisch gleich einer Summierung der Tokenzählungen aus den M Geräten ist, wobei K eine charakteristische Konstante des Netzwerks (10) ist, die einen Ganzzahlwert von mindestens 2 aufweist, der bei Erstellung des Netzwerks (10) festgelegt wird; und Versuch, das Gerät DJ ans Netzwerk (10) gemäß einer Anschlussregel, die die Gleichung einhält, anzuschließen.

14. Verfahren nach Anspruch 13, wobei die Anschlussregel bedingt, dass DJ mit einem Gerät DX der M Geräte verbunden wird und während DJ mit dem Gerät DX verbunden ist, ein Anschlussprotokoll ausgeführt werden muss, durch welches DX DJ authentifiziert (33) und durch welches DJ DX authentifiziert (41), und wenn die Authentifizierungen durch das Anschlussprotokoll hergestellt sind, dann DJ an das Netzwerk (10) angeschlossen wird, wenn S > 0, und das Anschlussprotokoll passt die Tokenzählungen der M Geräte derart an, dass S um 1 dekrementiert wird und die Anzahl der Geräte M des Netzwerks (10) um 1 inkrementiert wird, so dass die Gleichung beim Anschließen von DJ ans Netzwerk (10) erfüllt ist, wobei, wenn nicht jede der Authentifizierungen (33, 41) hergestellt ist, DJ dann nicht durch die Verbindung zwischen DJ und DX ans Netzwerk (10) angeschlossen wird.

15. Verfahren nach Anspruch 14, wobei vor dem Versuch DX eine Tokenzählung CX von mindestens 1 aufweist und wobei beim Anschließen von DJ ans Netzwerk (10) die Dekrementation S um 1 durch Dekrementation der Tokenzählung von DX um 1+α und Setzen der Tokenzählung von DJ auf α bewirkt wird, wobei α eine Ganzzahl im Bereich von 0 ≤ α ≤ CX-1 ist.

16. Verfahren nach Anspruch 14, wobei vor dem Versuch DX eine Tokenzählung CX von null aufweist, die DJ das Anschließen ans Netzwerk (10) durch die Verbindung zwischen DJ und DX versperrt.

17. Verfahren nach Anspruch 14, wobei vor dem Versuch DX eine Tokenzählung CX von null aufweist und M > 1, wobei während der Ausführung des Anschlussprotokolls DX direkt oder indirekt mit einem anderen Gerät DXX der M Geräte verbunden ist, wobei DXX eine Tokenzählung von mindestens 1 aufweist und wobei beim Anschließen von DJ ans Netzwerk (10) die Dekrementation S um 1 durch Dekrementation der Tokenzählung von DXX um 1 und Setzen der Tokenzählung von DJ auf null bewirkt wird.

18. Verfahren nach Anspruch 14, wobei jedes Gerät der M Geräte einen Speicher zum Speichern einer gleichen Netzwerkdatenstruktur aufweist, die Netzwerkinformation umfasst, die nicht auf irgendein Gerät der M Geräte beschränkt ist und wobei das Anschlussprotokoll nicht gestattet, dass DJ ans Netzwerk (10) angeschlossen wird, wenn DJ auf der Widerrufungsliste ist.

19. Verfahren nach Anspruch 14, wobei, wenn DJ ans Netzwerk (10) angeschlossen ist, dann das Anschlussprotokoll DJ einen Schlüssel zur Entschlüsselung bereitstellt und DJ einen Schlüssel zur Verschlüsselung bereitstellt, wenn DJ einen reellen Tokenzähler aufweist, aber DJ nicht den Schlüssel zur Verschlüsselung bereitstellt, wenn DJ einen virtuellen Tokenzähler aufweist.

20. Verfahren durch welches ein Gerät DL aus einem Netzwerk (10) von Geräten austritt, umfassend :
Bereitstellen des Netzwerks (10) als M Geräte (D1, D2, D3, DM) umfassend in einer Weise, dass M ≥ 1, wobei DL eines der M Geräte ist;
Jedes Gerät der M Geräte mit einem reellen oder virtuellen Tokenzähler, der eine Tokenzählung von mindestens null speichert, wobei eine Gleichung M + S = K erfüllt werden muss, wobei M eine Variable ist, die sich ändert, wenn Geräte sich ans Netzwerk (10) anschließen oder aus ihm austreten, wobei S die Anzahl der Token im Netzwerk (10) bezeichnet und numerisch gleich einer Summierung der Tokenzählungen aus den M Geräten ist, wobei K eine charakteristische Konstante des Netzwerks (10) ist, die einen Ganzzahlwert von mindestens 2 aufweist, der bei der Erstellung des Netzwerks (10) festgelegt wird, und
Versuch durch das Gerät DL aus dem Netzwerk (10) gemäß einer Austrittsregel, die die Gleichung einhält, auszutreten.

21. Verfahren nach Anspruch 20, wobei die Austrittsregel bedingt, dass DL mit einem Gerät DY der M Geräte verbunden ist und während DL mit dem Gerät DY verbunden ist, ein Austrittsprotokoll durchgeführt werden muss, durch welches DY DL authentifiziert (51) und durch welches DL DY authentifiziert (61), und wenn die Authentifizierungen durch das Austrittsprotokoll hergestellt sind, dann DL korrekt aus dem Netzwerk (10) gelöscht wird, und das Austrittsprotokoll passt die Tokenzählungen der verbleibenden M-1 Geräte derart an, dass S um 1 inkrementiert wird und die Anzahl der Geräte M des Netzwerks (10) um 1 dekrementiert wird, so dass die Gleichung beim Austreten von DL aus dem Netzwerk (10) erfüllt ist, wobei, wenn nicht jede der Authentifizierungen (51, 61) hergestellt ist, DL dann nicht aus dem Netzwerk (10) durch die Verbindung zwischen DL und DY treten kann.

22. Verfahren nach Anspruch 21, wobei beim Austreten von DL aus dem Netzwerk (10) die Inkrementation S um 1 durch Inkrementation der Tokenzählung von DY um 1+CL (54) bewirkt wird, wobei CL die Tokenzählung von DL ist.

23. Verfahren nach Anspruch 21, wobei M > 2 vor dem Austreten von DL aus dem Netzwerk (10), wobei beim Austreten von DL aus dem Netzwerk (10) die Inkrementation S um 1 durch Inkrementation der Tokenzählung von DY bewirkt wird und der Tokenzählungen weiterer J Geräte der M Geräte, mit welchen DY direkt oder indirekt derart verbunden ist, dass SJ+1 um 1+CL inkrementiert wird, wobei SJ+1 eine Summierung der Tokenzählungen aus DY und den J Geräten bezeichnet und wobei CL die Tokenzählung von DL ist.

24. Verfahren nach Anspruch 23, wobei die Tokenzählung von DY und die Tokenzählungen von den J Geräten individuell derart inkrementiert werden, dass die resultierenden Gesamt-Tokenzählungen von DY und den J Geräten ungefähr gleichmäßig zwischen DY und den J Geräten verteilt werden.

25. Verfahren nach Anspruch 23, wobei die Tokenzählung von DY und die Tokenzählungen von den J Geräten individuell derart inkrementiert werden, dass 1+CL Token etwa gleichmäßig zwischen DY und den J Geräten verteilt werden.

26. Verfahren nach Anspruch 23, wobei die Tokenzählung von DY und die Tokenzählungen von den J Geräten individuell derart inkrementiert werden, dass 1+CL Token zufällig zwischen DY und den J Geräten verteilt werden.

27. Verfahren nach Anspruch 20, wobei das Gerät DL jeden gespeicherten Inhalt (65) beim Austreten aus dem Netzwerk (10) zerstören muss.

## Revendications

1. Réseau (10) comprenant :
M dispositifs (D1, D2, D3, DM) tels que M ≥ 1;
chaque dispositif parmi les M dispositifs possédant un compteur de jetons réel ou virtuel qui stocke un compte de jetons qui n'est pas inférieur à zéro, dans lequel une équation M + S = K doit être satisfaite, dans lequel M est une variable qui change quand des dispositifs joignent ou se retirent du réseau (10), dans lequel S représente le nombre de jetons dans le réseau (10) et est numériquement égale à une somme des comptes de jetons des M dispositifs, dans lequel K est une constante caractéristique du réseau (10) ayant une valeur entière d'au moins 2 qui est établie à la création du réseau (10);
chaque dispositif parmi les M dispositifs étant aménagés pour fonctionner selon un ensemble de règles de réseau observant ladite équation;
l'ensemble de règles de réseau comprenant :
une règle d'inscription pour effectuer l'inscription d'un autre dispositif DJ hors-réseau au réseau (10); et
une règle de retrait pour effectuer le retrait d'un dispositif DL parmi les M dispositifs du réseau (10).

2. Réseau (10) selon la revendication 1, ladite règle d'inscription nécessitant que DJ soit connecté à un dispositif DX parmi les M dispositifs et pendant que DJ est connecté au dispositif DX, les dispositifs DJ et DX étant aménagés pour exécuter un protocole d'inscription par lequel DX authentifie (33) DJ et par lequel DJ authentifie (41) DX, et si lesdites authentifications sont établies par ledit protocole d'inscription, DJ est alors inscrit au réseau (10) si S > 0 et le protocole d'inscription ajuste les comptes de jetons des M dispositifs de façon à ce que S soit décrémenté de 1 et que le nombre M de dispositifs du réseau (10) soit incrémenté de 1 pour que ladite équation soit satisfaite lors de l'inscription de DJ au réseau (10), dans lequel, si aucune desdites authentifications (33, 41) n'est établie, DJ n'est alors pas inscrit au réseau (10) par la connexion entre DJ et DX.

3. Réseau (10) selon la revendication 2, dans lequel avant que DJ n'essaye de s'inscrire au réseau (10), le dispositif DX possède un compte de jetons CX d'au moins 1, et dans lequel lors de l'inscription de DJ au réseau (10), ladite décrémentation de S de 1 est effectuée en décrémentant le compte de jetons de DX de 1+α et en établissant le compte de jetons de DJ à α, α étant un entier dans l'intervalle 0 ≤ α ≤ CX-1.

4. Réseau (10) selon la revendication 2, dans lequel, avant que DJ n'essaye de s'inscrire au réseau (10), le dispositif DX possède un compte de jetons CX de zéro qui empêche DJ de s'inscrire au réseau (10) par la connexion entre DJ et DX.

5. Réseau (10) selon la revendication 2, dans lequel, avant que DJ n'essaye de s'inscrire au réseau (10), le dispositif DX possède un compte de jetons CX de zéro et M > 1, dans lequel pendant l'exécution du protocole d'inscription, DX est directement ou indirectement connecté à un autre dispositif DXX parmi les M dispositifs, le dispositif DXX étant aménagé pour exécuter ledit protocole d'inscription, dans lequel DXX possède un compte de jetons d'au moins 1, et dans lequel lors de l'inscription de DJ au réseau (10), ladite décrémentation de S de 1 est effectuée en décrémentant le compte de jetons de DXX de 1 et en établissant le compte de jetons de DJ à zéro.

6. Réseau (10) selon la revendication 2, dans lequel chaque dispositif parmi les M dispositifs possède une mémoire pour stocker une même structure de données de réseau qui comprend des informations de réseau qui ne sont uniques à aucun dispositif parmi les M dispositifs, dans lequel la structure de données de réseau comprend une liste de révocation de dispositifs malveillants, et dans lequel le protocole d'inscription ne permet pas à DJ d'être inscrit au réseau (10) si DJ est sur la liste de révocation.

7. Réseau (10) selon la revendication 2, dans lequel, si DJ est inscrit au réseau (10), le protocole d'inscription fournit alors à DJ une clé de déchiffrement et fournit à DJ une clé de chiffrement si DJ possède un compteur de jetons réel mais ne fournit pas à DJ ladite clé de chiffrement si DJ possède un compteur de jetons virtuel.

8. Réseau (10) selon la revendication 1, dans lequel ladite règle de retrait nécessite que DL soit connecté à un dispositif DY parmi les M dispositifs et, pendant que DL est connecté au dispositif DY, les dispositifs DL et DY sont aménagés pour exécuter un protocole de retrait par lequel DY authentifie (51) DL et par lequel DL authentifie (61) DY, et, si lesdites authentifications sont établies par ledit protocole de retrait, DL est alors enlevé du réseau (10) et le protocole de retrait ajuste les comptes de jetons des M-1 dispositifs restants pour que S soit incrémenté de 1 et que le nombre M de dispositifs du réseau (10) soit décrémenté de 1 pour que ladite équation soit satisfaite lors du retrait de DL du réseau (10), dans lequel, si aucune desdites authentifications (51, 61) n'est établie, DL ne peut alors pas se retirer du réseau (10) par la connexion entre DL et DY.

9. Réseau (10) selon la revendication 8, dans lequel lors du retrait de DL du réseau (10), ladite incrémentation de S de 1 est effectuée en incrémentant le compte de jetons de DY de 1 +CL (54), dans lequel CL est le compte de jetons de DL.

10. Réseau (10) selon la revendication 8, dans lequel M > 2 avant le retrait de DL du réseau (10), dans lequel, lors du retrait de DL du réseau (10), ladite incrémentation de S de 1 est effectuée en incrémentant le compte de jetons de DY et les comptes de jetons de J autres dispositif parmi les M dispositifs auxquels DY est directement ou indirectement connecté de sorte que SJ+1 soit incrémenté de 1+CL, dans lequel SJ+1 représente une somme des comptes de jetons de DY et des J dispositifs, et dans lequel CL est le compte de jetons de DL.

11. Réseau (10) selon la revendication 1, dans lequel le dispositif DL est aménagé pour effacer tout contenu stocké (65) en se retirant le réseau (10).

12. Réseau (10) selon la revendication 1, dans lequel l'ensemble de règles de réseau comprend une règle de redistribution de jetons qui prescrit au moins une condition qui active une redistribution des S jetons parmi les M dispositifs, et dans lequel la règle de redistribution de jetons prescrit de plus un algorithme pour effectuer ladite redistribution, et dans lequel l'algorithme prend en compte la condition qui a activé la redistribution.

13. Procédé d'inscription d'un dispositif DJ hors-réseau dans un réseau (10) de dispositifs, comprenant :
la fourniture du réseau (10) comprenant M dispositifs (D1, D2, D3, DM) tels que M ≥ 1;
chaque dispositif parmi les M dispositifs possédant un compteur de jetons réel ou virtuel qui stocke un compte de jetons qui n'est pas inférieur à zéro, dans lequel une équation M + S = K doit être satisfaite, dans lequel M est une variable qui change quand des dispositifs joignent ou se retirent du réseau (10), dans lequel S représente le nombre de jetons dans le réseau (10) et est numériquement égal à une somme des comptes de jetons des M dispositifs, dans lequel K est une constante caractéristique du réseau (10) ayant une valeur entière d'au moins 2 qui est établie à la création du réseau (10); et
une tentative d'inscription du dispositif DJ au réseau (10) selon une règle d'inscription observant ladite équation.

14. Procédé selon la revendication 13, ladite règle d'inscription nécessitant que DJ soit connecté à un dispositif DX parmi les M dispositifs et, pendant que DJ est connecté au dispositif DX, un protocole d'inscription doive être exécuté, par lequel DX authentifie (33) DJ et par lequel DJ authentifie (41) DX, et, si lesdites authentifications sont établies par ledit protocole d'inscription, DJ est alors inscrit au réseau (10) si S > 0 et le protocole d'inscription ajuste les comptes de jetons des M dispositifs de façon à ce que S soit décrémenté de 1 et le nombre M de dispositifs du réseau (10) soit incrémenté de 1 pour que ladite équation soit satisfaite lors de l'inscription de DJ au réseau (10), dans lequel, si aucune desdites authentifications (33, 41) n'est établie, DJ n'est alors pas inscrit au réseau (10) par la connexion entre DJ et DX.

15. Procédé selon la revendication 14, dans lequel, avant ledit essai, DX possède un compte de jetons CX d'au moins 1, et dans lequel, lors de l'inscription de DJ au réseau (10), ladite décrémentation de S de 1 est effectuée en décrémentant le compte de jetons de DX de 1+α et en établissant le compte de jetons de DJ à α, α étant un entier dans l'intervalle 0≤α≤CX-1.

16. Procédé selon la revendication 14, dans lequel, avant ledit essai, DX possède un compte de jetons CX de zéro qui empêche DJ de s'inscrire au réseau (10) par la connexion entre DJ et DX.

17. Procédé selon la revendication 14, dans lequel, avant ledit essai, DX possède un compte de jetons CX de zéro et M > 1, dans lequel, pendant l'exécution du protocole d'inscription, DX est directement ou indirectement connecté à un autre dispositif DXX parmi les M dispositifs, dans lequel DXX possède un compte de jetons d'au moins 1, et dans lequel, lors de l'inscription de DJ au réseau (10), ladite décrémentation de S de 1 est effectuée en décrémentant le compte de jetons de DXX de 1 et en établissant le compte de jetons de DJ à zéro.

18. Procédé selon la revendication 14, dans lequel chaque dispositif parmi les M dispositifs possède une mémoire pour stocker une même structure de données de réseau qui comprend des informations de réseau qui ne sont uniques à aucun dispositif parmi les M dispositifs, dans lequel la structure de données de réseau comprend une liste de révocation de dispositifs malveillants, et dans lequel le protocole d'inscription ne permet pas à DJ d'être inscrit au réseau (10) si DJ est sur la liste de révocation.

19. Procédé selon la revendication 14, dans lequel, si DJ est inscrit au réseau (10), le protocole d'inscription fournit alors à DJ une clé de déchiffrement et fournit à DJ une clé de chiffrement si DJ possède un compteur de jetons réel mais ne fournit pas à DJ ladite clé de chiffrement si DJ possède un compteur de jetons virtuel.

20. Procédé par lequel un dispositif DL se retire du réseau (10) de dispositifs, comprenant :
la fourniture du réseau (10) comprenant M dispositifs (D1, D2, D3, DM) tels que M ≥ 1, le dispositif DL étant un des M dispositifs;
chaque dispositif parmi les M dispositifs possédant un compteur de jetons réel ou virtuel qui stocke un compte de jetons qui n'est pas inférieur à zéro, dans lequel une équation M + S = K doit être satisfaite, dans lequel M est une variable qui change quand des dispositifs joignent ou se retirent du réseau (10), dans lequel S représente le nombre de jetons dans le réseau (10) et est numériquement égal à une somme des comptes de jetons des M dispositifs, dans lequel K est une constante caractéristique du réseau (10) ayant une valeur entière d'au moins 2 qui est établie à la création du réseau (10); et
une tentative d'inscription du dispositif DL au réseau (10) selon une règle de retrait observant ladite équation.

21. Procédé selon la revendication 20, ladite règle de retrait nécessitant que DL soit connecté à un dispositif DY parmi les M dispositifs et, pendant que DL est connecté au dispositif DY, un protocole de retrait doit être exécuté, par lequel DY authentifie (51) DL et par lequel DL authentifie (61) DY, et si lesdites authentifications sont établies par ledit protocole de retrait, DL est alors correctement enlevé du réseau (10) et le protocole de retrait ajuste les comptes de jetons des M-1 dispositifs restant de façon à ce que S soit incrémenté de 1 et que le nombre M de dispositifs du réseau (10) soit décrémenté de 1 pour que ladite équation soit satisfaite lors du retrait de DL du réseau (10), dans lequel, si aucune desdites authentifications (51, 61) n'est établie, DL n'est peut alors pas se retirer du réseau (10) par la connexion entre DL et DY.

22. Procédé selon la revendication 21, dans lequel, lors du retrait de DL du réseau (10), ladite incrémentation de S de 1 est effectuée en incrémentant le compte de jetons de DY de 1 +CL (54), CL étant le compte de jetons de DL.

23. Procédé selon la revendication 21, dans lequel M > 2 avant le retrait de DL du réseau (10), dans lequel, lors du retrait de DL du réseau (10), ladite incrémentation de S de 1 est effectuée en incrémentant le compte de jetons de DY et les comptes de jetons des J autres dispositifs parmi les M dispositifs auxquels DY est directement ou indirectement connecté de sorte que SJ+1 soit incrémenté de 1+CL, dans lequel SJ+1 représente une somme des comptes de jetons de DY et des J dispositifs, et dans lequel CL est le compte de jetons de DL.

24. Procédé selon la revendication 23, dans lequel le compte de jetons de DY et les comptes de jetons des J dispositifs sont individuellement incrémentés pour que le compte de jetons total résultant de DY et des J dispositifs soit approximativement uniformément distribué parmi DY et les J dispositifs.

25. Procédé selon la revendication 23, dans lequel le compte de jetons de DY et les comptes de jetons des J dispositifs sont individuellement incrémentés pour que les 1 +CL jetons soient approximativement uniformément distribués parmi DY et les J dispositifs.

26. Procédé selon la revendication 23, dans lequel le compte de jetons de DY et les comptes de jetons des J dispositifs sont individuellement incrémentés pour que les 1+CL jetons soient aléatoirement distribués parmi DY et les J dispositifs.

27. Procédé selon la revendication 20, dans lequel le dispositif DL doit effacer tout contenu stocké (65) en se retirant le réseau (10).
